# EUROPÄISCHE PATENTSCHRIFT

(11) **EP 0 701 012 B1**
(45) Veröffentlichungstag und Bekanntmachung des Hinweises auf die Patenterteilung: **27.03.2002**
(21) Anmeldenummer: 95113853.6
(22) Anmeldetag: 04.09.1995
(51) Int. Cl.: D01G 15/36

(54) **Verfahren und Vorrichtung zum Steuern der Antriebe einer Kardiermaschine oder eines Krempels**
Method and apparatus for the drive control of a cotton or woolen carding machine
Procédé et appareil de contrôle de l'entraînement d'une machine de cardage pour le coton ou pour la laine

(30) Priorität: 08.09.1994 CH 274494
(43) Veröffentlichungstag der Anmeldung: 13.03.1996
(73) Patentinhaber: MASCHINENFABRIK RIETER AG, CH-8406 Winterthur (CH)
(72) Erfinder: Werner, Dieter, D-73037 Göppingen (DE); Jaeger, Wolfgang, D-73035 Göppingen (DE); Müller, Christian, CH-8400 Winterthur (DE); Faas, Jürg, CH-8474 Dinhard (CH)

(56) Entgegenhaltungen:
- EP-A- 0 194 771
- DE-U- 9 312 638
- FR-A- 1 444 338
- GB-A- 1 069 815
- PATENT ABSTRACTS OF JAPAN vol. 0 no. 0 & JP-A-07 070830 (HOWA MACH LTD) 14.März 1995,
- PATENT ABSTRACTS OF JAPAN vol. 5 no. 45 (C-048) ,25.März 1981 & JP-A-56 000319 (TEIKOKU SANGYO KK ) 6.Januar 1981,

## Beschreibung

Die Erfindung betrifft Antriebssysteme für Karde und Krempel, das heisst für Maschinen, die je einen mit einer Garnitur versehenen Tambour (Trommel) aufweisen, wobei die Garnitur des Tambours mit um den Umfang des Tambours verteilten Arbeitselementen (z.B. Wanderdeckel) zusammenarbeitet, um eine Kardierwirkung zu erzielen. Eine solche Maschine umfasst ebenfalls eine Materialzufuhr (z.B. mit einem Briseur - auch Vorreisser genannt - und einer drehzahlsteuerbaren Speisewalze) und einem sogenannten Auslauf, der einen Abnehmer umfasst, welcher Fasern vom Tambour übernimmt und sie in der Form eines Vlieses weitergibt.

Die Uebergabe von Fasern vom Tambour an den Abnehmer ist zum Teil von der Relativgeschwindigkeit der beiden zusammenarbeitenden Walzen abhängig, zum Teil aber auch von den Absolutdrehzahlen der einzelnen Walzen. Die Erfinder haben festgestellt, dass das System bei niedrigeren Drehzahlen besonders empfindlich auf Schwankungen der Relativgeschwindigkeit reagiert, insbesondere auf zu niedrige Tambourdrehzahlen.

Daraus wird klar, dass diese Erkenntnisse eine Verbesserung des Laufverhaltens einer Karde bei niedrigeren Drehzahlen ermöglichen. Dies erfordert aber Aenderungen im heutigen Antriebssystem für die Karde, welches derzeit derart gestaltet ist, dass ein Bandbruch beim Abstellen praktisch unvermeidbar ist. Die Vorteile sind besonders ausgeprägt, wo von den Karden gelieferte Bänder direkt (ohne das Zwischenspeichern in einem Puffer) an die nächstfolgende Verarbeitungsstufe (z.B. an die Strecke) übergeben werden, zum Beispiel nach CH 400 855.

Es sind heute viele verschiedene Vorschläge für die Gestaltung des Antriebssystems einer Karde bekannt, wovon einzelne Beispiele nachfolgend aufgeführt sind.

### Stand der Technik

Die deutsche Offenlegungsschrift 15 10 410 beschreibt eine Kopplung zwischen dem Tambourantrieb und dem Hackerantrieb eines Krempels, so dass der Hacker und der Tambour bei einem Spannungsausfall synchron miteinander auslaufen.

In der deutschen Offenlegungsschrift DE-A-15 10 481 ist eine Regelung der Liefergeschwindigkeit von Karden in Abhängigkeit von im Fertigungsablauf nachfolgenden Spinnereivorbereitungsmaschinen, zum Beispiel Strecken, beschrieben. Zwischen der Karde und der Strecke ist ein Bandzwischenspeicher vorgesehen, um einen zeitlichen Ausgleich zwischen der Liefergeschwindigkeit und der Einzugsgeschwindigkeit der Vorbereitungsmaschine zu bieten. Im Zwischenspeicher ist eine Speicherabtastvorrichtung vorgesehen, die bei Erreichen eines vorbestimmten maximalen Füllgrades ein Umschaltsignal erzeugt, so dass der Antrieb der Karde von einer Dreieck-Schaltung auf die Stern-Schaltung umgeschaltet wird. Die Drehzahl des Antriebsmotors läuft dann bei ungefähr 10 bis 20% geringerer Drehzahl als die maximale Drehzahl bei der Dreieck-Schaltung. Ebenso gibt es Umschaltsignal, wenn ein minimaler Füllungsgrad im Speicher unterschritten wird, wodurch wieder von der Stern-Schaltung auf die Dreiecksschaltung umgeschaltet wird. Es werden keine speziellen Massnahmen getroffen, um die Karde bei niedrigen Drehzahlen zu steuern.

Eine neuere als nächstliegendet Stand der Technik betrachtete Schrift, DE-A-35 07 242, beschreibt ein Antriebssystem für Deckelkarden oder Krempeln und die Drehzahlregelung der Speisewalze, des Vorreissers/Trommelantriebes, des Abnehmers und der Deckelkette. Um eine einfache, elektronische Regelung der Drehzahlverhältnisse bei Sicherung einer hohen Bandqualität der Deckelkarde oder Krempel zu schaffen, sind in den Stromzuführungen des Antriebsmotors des Vorreisser-/Trommelantriebes und des Antriebsmotors des Abnehmers je ein Frequenzumrichter angeordnet. Die Stromzuführungen des Antriebsmotors des Vorreisser-/Trommelantriebes und des Antriebsmotors des Abnehmers sind ferner über eine Umschalteinheit geführt. Mit der Umschalteinheit ist ein Anlauf- oder Bremslaufregelkreis mit Wechselrichter in die Stromzuführungen des Antriebmotors des Vorreisser-/Trommelantriebes oder des Antriebsmotors des Abnehmers an Stelle dessen Frequenzumrichters einschaltbar, der nach dem Hochlauf- oder Bremslaufvorgang abschaltbar oder auf andere Deckelkarden umschaltbar ist. Beim Hochlauf und Bremsen der Deckelkarde oder des Krempels werden nach diesem Verfahren alle Antriebe gleichzeitig über die gleiche Hochlauf- oder Bremskurve gesteuert. Dies geht unter anderem aus der Figurenbeschreibung zur einzigen Zeichnung hervor. Mit einem Potentiometer sollen die Soll-Wert-Vorgaben für die Antriebe eingestellt werden. Offensichtlich werden die Kurven in einem Operationsverstärker mit PI-Verhalten bestimmt. Die zu erreichenden Endgeschwindigkeiten sollen dann mit dem Potentiometer eingestellt werden und mit den gemessenen Ist-Werten im Operationsverstärker verglichen werden, um aufgrund der Spannungsdifferenzen die Antriebe in ihrem Hochlauf oder Bremsvorgang zu steuern. Eine individuelle Steuerung der einzelnen Antriebe ist hier nicht vorgesehen und auch nicht möglich. Wie die verschiedenen Endgeschwindigkeiten der einzelnen Antriebe zueinander eingestellt werden, wird in dieser Schrift nicht erwähnt.

Eine weitere Schrift, DE-A-37 08 211, beschreibt eine Vorrichtung zur Verbesserung des Kardierprozesses einer Karde oder Krempel, bei der die Trommel mit einem elektrischen Antriebsmotor verbunden ist und wobei zwischen dem Hochlauf-und Bremsvorgang eine Arbeitsphase vorhanden ist. Um eine einfache und schnelle Anpassung der Trommelarbeitsgeschwindigkeit bei Aenderung der Fasermaterialpartie, eine erneute Inbetriebnahme der Karde ohne Band- bzw. Faservliesabriss und eine Reduzierung der Nissenzahl zu ermöglichen, dient als Antriebsvorrichtung für die Trommel ein drehzahlgesteuerter Elektromotor, der mit einer Steuereinrichtung für die Einstellung vorgegebener Motordrehzahlen verbunden ist. Der Trommel ist als Messwertaufnehmer ein elektronischer Tachogenerator zugeordnet, der an einem Analog-/Digitalwandler angeschlossen ist. Dieser steht seinerseits mit einem Mikrocomputer in Verbindung, der einen Mikroprozessor mit Speicher und eine elektronischen Steuereinheit enthält. Ueber einen ersten Digital-/Analog-Leistungsumsetzer ist der Mikrocomputer einerseits mit dem Motor für die Speisewalze und andererseits über einen zweiten Digital-/Analog-Leistungsumsetzer mit dem Motor für den Abnehmer verbunden. Ferner ist der Mikrocomputer über einen dritten Digital-/Analog-Leistungsumsetzer mit dem elektrischen Antriebsmotor für die Trommel verbunden. Im Betrieb werden die Drehzahlen der Trommel durch den Tachogenerator in analoge elektrische Signale umgesetzt. Diese Signale werden durch den Analog-/Digitalwandler in digitale Signale umgesetzt und bilden die Eingangssignale in den Mikrocomputer. Aus den Eingangssignalen und gespeicherten Programmdaten werden über den Mikroprozessor digitale elektrische Ausgangssignale entwickelt. Diese Digitalsignale werden durch den nachfolgenden Digital-/Analog-Leistungsumsetzer wieder in analoge elektrische Signale umgesetzt und gelangen anschliessend in den elektrischen Antriebsmotor, mit dem die Trommel gesteuert wird. Es wird noch erwähnt, dass der Elektromotor bevorzugt ein frequenzgesteuerter Drehstrom-Kurzschlussläufer ist, der von einem als Frequenzumrichter ausgestalteten Drehzahlregelgerät gesteuert wird. Die Drehzahlabhängigkeiten zu den anderen Antrieben wie zum Elektromotor für die Speisewalze und zum Elektromotor für den Abnehmer sind in einem festen Verhältnis zur Drehgeschwindigkeit der Trommel vorgegeben, sofern sich dies aus dieser Schrift entnehmen lässt.

Im allgemeinen wird heute für die Trommel und für den Auslauf je ein Motor vorgesehen. Während die Patentliteratur eine Fülle von Lösungen enthält, die einen gesteuerten Hochlauf bzw. Abbremsen der Karde ermöglichen, wird wenig bis nichts darüber gesagt, wie diese Phasen (und insbesondere die Abschnitte mit niedrigen Drehzahlen) mittels der Steuerung zu gestalten sind.

Die Erfindung betrifft eine Karde mit einer Trommel (4) und einem Auslauf (8), einem Antriebsmotor (16) für die Trommel (4), mindestens einem Antriebsmotor (15) für den Auslauf und einer Steuerung (µp) für die Motoren (15, 16) dadurch gekennzeichnet, dass die Steuerung derart programmiert ist, dass beim Hochfahren bzw. beim Abstellen in einem ersten Drehzahlbereich in der Nähe des Stillstands die Motoren (15, 16) derart miteinander synchronisiert werden, dass dadurch Bandbrüche wegen Synchronisierungsfehler in diesem Drehzahlbereich vermieden werden, dass allenfalls in einem zweiten Drehzahlbereich in der Nähe der Betriebsdrehzahl auch eine Synchronisierung stattfindet, dass aber in einem dazwischenliegenden Drehzahlbereich keine solche Synchronisierung erfolgt.

Die Synchronisierung erfolgt zumindest über Perioden relativ niedriger Drehzahlen, das heisst während Perioden, die sich direkt an den Stillstand anschliessen. Die Genauigkeit der Synchronisierung soll ausreichen, einen Bandbruch zu vermeiden. Sofern das Risiko eines Synchronisierungsfehlers in Kauf genommen wird, sollte abgesichert werden, dass die Trommeln eher zu schnell als zu langsam drehen.

Die Synchronisierung kann ab bzw. bis zu einer vorgegebenen Mindestdrehzahl der Trommel bzw. des Abnehmers erfolgen.

Vorzugsweise dient die Trommel bzw. ein Element, welches die Drehzahl der Trommel bestimmt, als Leitelement für die Synchronisierung.

Es können spezifische Drehzahlverhältnisse während des Bremsvorgangs und/oder während des Hochlaufs je nach Provenienz, Art der Verschmutzung und anderen technologischen Parametern der Faservorlage eingestellt werden. Dies betrifft sowohl die absolute Grösse der Drehgeschwindigkeit als auch deren zeitliche Staffelung.

Die Erfindung wird nachfolgend anhand von in den Zeichnungen dargestellten Ausführungsbeispielen näher erläutert. Dabei zeigt:
- Fig. 1: schematisch eine bekannte Karde,
- Fig. 2: eine erste Ausführungsform einer geänderten Steuerung für eine solche Kardiermaschine,
- Fig. 3: eine zweite Ausführungsform einer geänderten Steuerung für eine solche Kardiermaschine,
- Fig. 4: eine dritte Ausführungsform einer geänderten Steuerung für eine solche Kardiermaschine,
- Fig. 5: eine vierte Ausführungsform einer geänderten Steuerung für eine solche Kardiermaschine,
- Fig. 6: ein Zeitdiagramm für den Abbremsvorgang der Karde nach Fig. 1,
- Fig. 7: ein Zeitdiagramm für den Abbremsvorgang, der anhand der geänderten Steuerungen realisiert werden kann,
- Fig. 8: ein Zeitdiagramm für den Hochlauf der mit einer Steuerung nach Fig. 2,3,4 oder 5 realisiert werden kann,
- Fig. 9: ein Blockschaltbild eines Antriebskonzeptes für die Karde, welches ebenfalls die Realisierung der Erfindung ermöglicht,
- Fig. 10: ein Signalflussdiagramm für einen Antrieb nach Fig. 8, und
- Fig. 11: ein Zeitdiagramm für das Abbremsen einer Karde mit einem Antrieb nach Fig. 8 und 9.

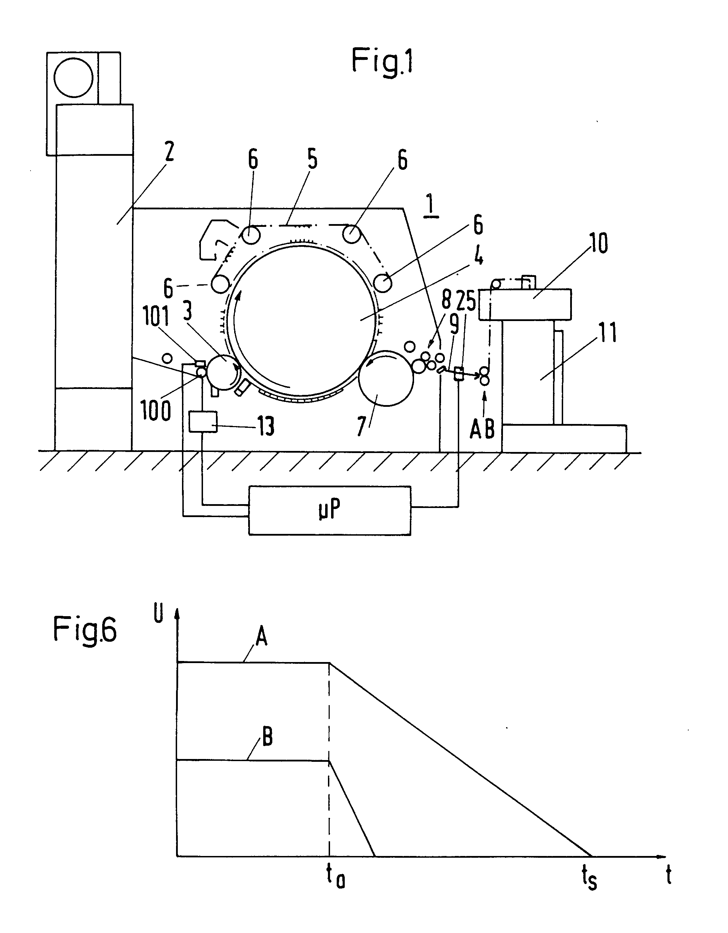

In Fig. 1 ist eine an sich bekannte Wanderdeckelkarde 1, beispielsweise die Karde C50 der Anmelderin, schematisch dargestellt. Das Fasermaterial wird in der Form von aufgelösten und gereinigten Flocken in den Füllschacht 2 eingespeist, von einer Speisewalze 100 (mit einer Speisemulde 101) an einen Briseur oder Vorreisser 3 als Wattenvorlage weitergegeben, einem Tambour oder einer Trommel 4 übergeben und von einem Wanderdeckelsatz 5 parallelisiert, der über Umlenkrollen 6 gegenläufig zur Drehrichtung des Tambours 4 angetrieben ist. Fasern aus dem auf dem Tambour 4 befindlichen Faservlies werden dann von einer Abnehmerwalze 7 abgenommen und in einer aus verschiedenen Walzen bestehenden Auslaufpartie 8 zu einem Kardenband 9 gebildet. Dieses Kardenband 9 wird dann von einer Bandablage 10 in eine Transportkanne 11 in zykloidischer Art abgelegt.

Die Karde umfasst auch eine Steuerung µP und einen Motor 13, der die Speisewalze 100 mit einer variablen Drehzahl antreibt. Ein Sensor 25 misst die Dicke des Faserbandes im Auslauf und leitet ein entsprechendes Signal an die Steuerung µP. Zwischen der Mulde 101 und der Speisewalze 100 wird die Dicke der einlaufenden Watte gemessen und ein entsprechendes Signal wird ebenfalls an die Steuerung µP geleitet. Anhand dieses Signals erzeugt die Steuerung µP ein Leitsignal für den Motor M, so dass die Materialmenge, die an den Briseur 3 abgegeben wird, zum Einhalten einer möglichst konstanten, vorgegebenen Bandnummer bzw CV% geregelt und gesteuert wird. Diese Anordnung ist wohlbekannter Stand der Technik.

Die Erfüllung der Soll-Vorgaben bezüglich der Gleichmässigkeit des Bandes ist aber nur dann möglich, wenn die Karde einen stabilen Arbeitszustand erreicht hat. Insbesondere sollte der Verzug zwischen dem Tambour und dem Abnehmer einen vorbestimmten Wert einhalten. Diese Voraussetzung ist erfüllt, weder während des Hochlaufens, noch während des Abbremsens (wärend den "Durchgangsphasen"). Die Steuerung ist daher derart programmiert, dass keine Korrekturen für Bandnummer - bzw. Vorlagegewichtsschwankungen während den Durchgangsphasen stattfinden. Stattdessen wird die Speisewalze mit einer Drehzahl angetrieben, die beim Abbremsen die Materialzufuhr aufrechterhält, bis der Abnehmer zum Stillstand kommt, und beim Hochlaufen die Materialzufuhr allmählich auf ein vorgegebenes Niveau erhöht. Um die Beschreibung zu vereinfachen, wird hiernach meistens nur das Abbremsen erklärt, wobei vorausgesetzt wird, dass das Hochlaufen entsprechend behandelt werden kann.

Die Bandqualität ist während einer Durchgangsphase schlecht. Beim Abbremsen wird daher der Abnehmer möglichst schnell zum Stillstand gebracht, so dass die Lieferung des schlechten Bandes baldmöglichst gestoppt wird. Dabei entsteht aber ein Bandbruch, weil der Tambour (der eine relativ hohe Massenträgheit aufweist) noch viel länger dreht. Normalerweise lässt man den Tambour eher auslaufen als ihn gesteuert abzubremsen.

Solche Bandbrüche sollen nun dadurch vermieden werden, dass während des Abbremsens die abnehmenden Drehzahlen des Tambours und des Abnehmers miteinander synchronisiert werden. Dazu muss aber das Antriebssystem nach Fig. 1 mit Synchronisierungsmitteln ergänzt werden, wie nachfolgend erklärt wird.

In den weiteren Figuren sind soweit möglich die schon beschriebenen Elemente jeweils mit denselben Bezugszeichen angegeben, und die neuen Elemente werden nur einmal beschrieben. Es werden vorerst einige Möglichkeiten beschrieben, das Antriebssystem als Ganzes zum Zwecke der Synchronisierung zu gestalten, wobei alle diese Möglichkeiten zur Realisierung der Erfindungen angewendet werden können. Die nachfolgend beschriebenen Synchronisierungsmittel sind konzipiert, die Karde während einer Durchgangsphase zu steuern. Der Normalbetrieb (Fig. 1) wird dadurch nicht verändert.

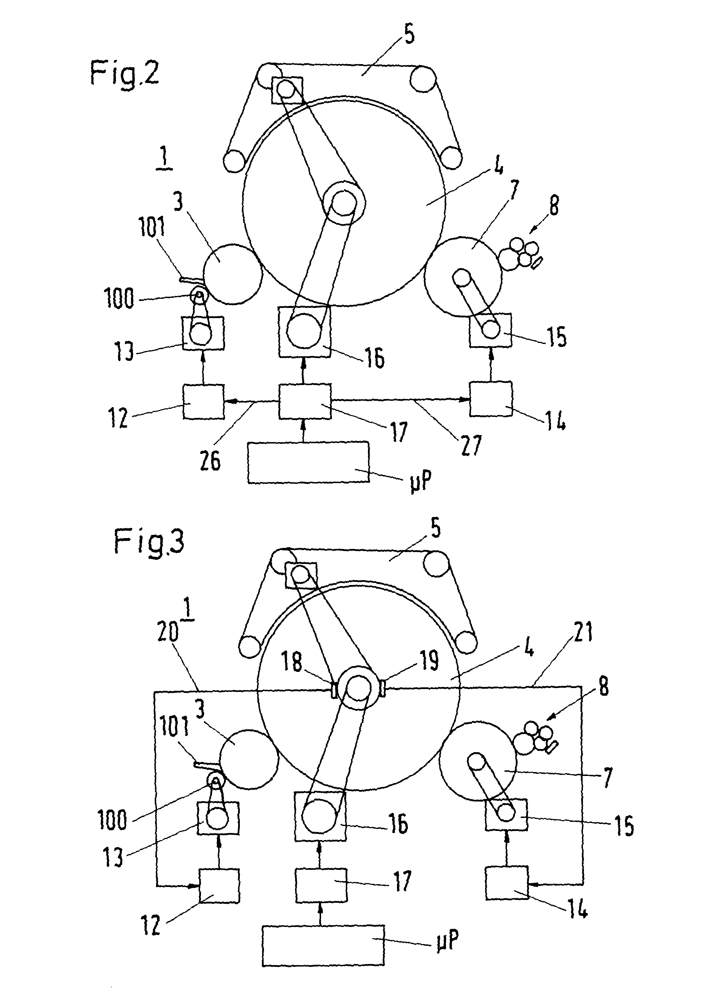

In Figur 2 ist rein schematisch eine Kardiermaschine oder ein Krempel 1 mit einer Trommel 4, einem Briseur oder Vorreisser 3, einer Speisewalze 100 mit einer Speisemulde 101, einem aus mehreren Walzen bestehenden Kardenauslauf 8, umfassend eine Abnehmerwalze 7 (auch Abnehmer genannt), und einem wandernden Deckelsatz 5 dargestellt. Die Trommel 4 ist mit einem Asynchronmotor 16 angetrieben, dem ein Frequenzumrichter 17 zugeordnet ist. Mit hier nicht näher bezeichneten Flachriemen ist der Motor 16 in bekannter Weise mit der Trommel 4 und mit dem Deckelsatz 5 antriebsmässig verbunden. Auch der Briseur 3 ist von diesem Motor 16 über hier nicht dargestellte Flachriemen angetrieben. Für die Speisewalze 100 ist ein Asynchronmotor 13 mit einem Frequenzumrichter 12 und für den Auslauf 8, insbesondere die Abnehmerwalze 7 ein Asynchronmotor 15 mit einem Frequenzumrichter 14 vorgesehen, die diese Walzen mittels Zahnriemen antreiben. Die anderen Walzen des Kardenauslaufs 8 sind antriebsmässig über Zahnriemen oder auch über ein Zahngetriebe mit der Abnehmerwalze 7 verbunden.

Nur der Frequenzumrichter 17 für den Antrieb der Trommel 4 ist mit der Steuerung µP verbunden, die ein Sollwertsignal für die Drehgeschwindigkeit der Trommel 4 erzeugt. Im Frequenzumrichter 17 wird dann dieses Frequenz- oder Digitalsignal erstens verwendet für die Drehzahlsteuerung der Trommel 4 und zweitens umgesetzt in einen ersten Leitwert, welcher an den Frequenzumrichter 12 weitergeleitet wird, und in einen zweiten Leitwert, welcher an den Frequenzumrichter 14 weitergeleitet wird. Diese Leitwerte sind zwar vom Sollwertsignal der Steuerung µP abgeleitet, jedoch ist die Beziehung der vorgenannten Leitwerte zu diesem Signal frei wählbar, d.h. nicht auf ein fest vorgegebenes Verhältnis eingeschränkt. Diese Verknüpfung ist mit den Leitungen 26 und 27 zwischen dem Frequenzumrichter 17 und den Frequenzumrichtern 12 und 14 verdeutlicht, d.h. die vorgenannten Leitwerte werden an die Frequenzumrichter 12 und 14 weitergeleitet.

In Figur 3 ist eine Variante der Ausführung nach Figur 2 dargestellt, wobei die Leitwerte für die Antriebe des der Speisewalze 100 und der Abnehmerwalze 7 hier von Drehzahlsensoren 18 und 19 an der Trommel 4 abgenommen werden. Diese Signale werden über elektrische Leitungen 20 und 21 an die Frequenzumrichter 12 und 14 weitergeleitet. Bei dieser Variante ist daher die aktuelle Drehgeschwindigkeit der Trommel 4 für die Festlegung der Leitwerte massgebend, jedoch werden diese Leitwerte nicht in einem fest vorgegebenen Verhältnis vorgegeben, sondern sind auch hier in Abhängigkeit der Vorlage (Baumwollprovenienz) nach ihrer Grösse und ihrer zeitlichen Zuordnung zur Trommeldrehgeschwindigkeit frei wählbar. Damit ist der Verbund zwischen einer Karde und einer Strecke ohne Kannen mittels eines kleinen Zwischenspeichers auf eine sehr einfache und zuverlässige Art realisierbar. Dieser Verbund ist hier nicht weiter dargestellt, aber schematisch aus der Figur 1 in der vorgenannten DE-A-15 10 481 entnehmbar.

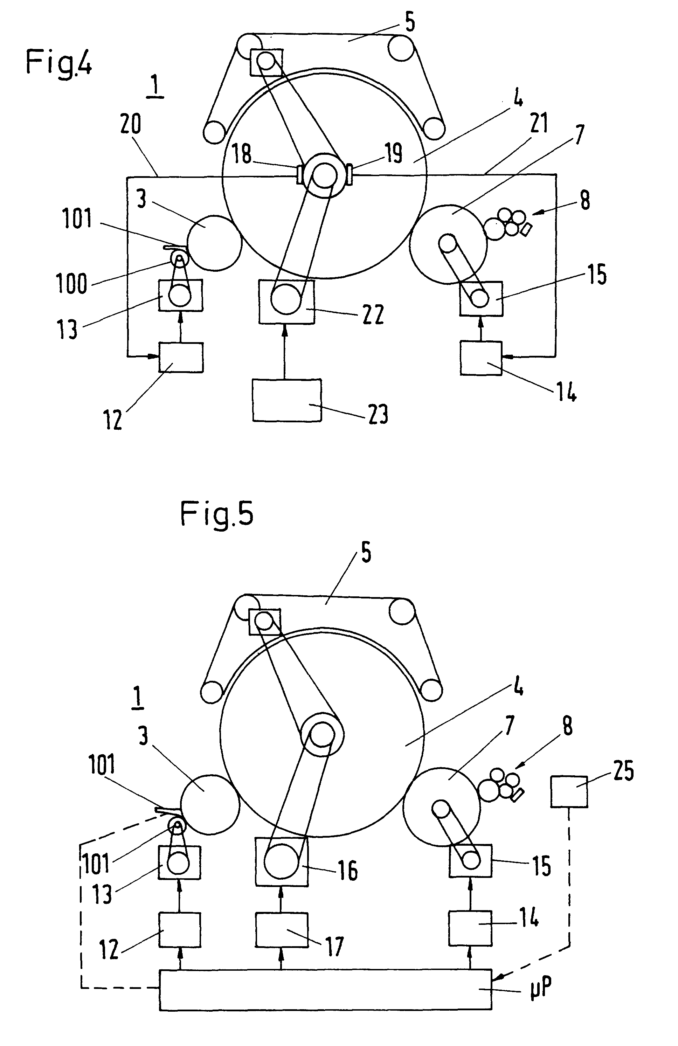

In Figur 4 ist eine weitere Variante dargestellt, die sich von der Ausführung in der Figur 3 ableiten lässt. Anstatt eines Asynchronmotors 16 mit Umrichter 17 ist hier ein polumschaltbarer Asynchronmotor 22 mit einer zugehörigen Motorensteuerung 23 vorgesehen. Ansonsten ist die Ausführung identisch mit derjenigen der Figur 3, und gelten die obigen Bemerkungen.

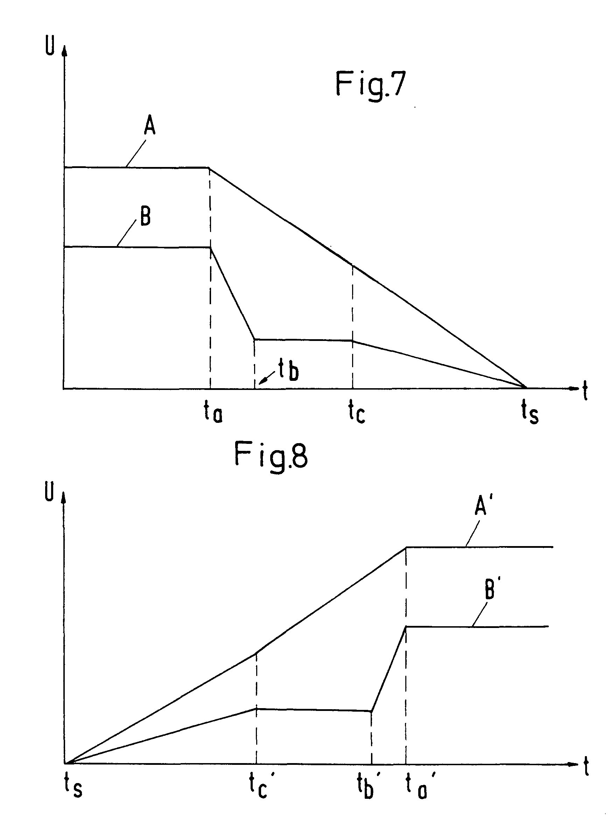

In Fig. 5 ist nochmals eine Variante der Fig. 2 und Fig. 1 dargestellt, wobei nunmehr der Umrichter 17 nicht mit den Umrichtern 12 und 14 verbunden ist, sondern eine Steuerung µP vorgesehen ist, die die Sollwerte für die Antriebe der Trommel 4, der Speisewalze 100 und der Abnehmerwalze 7 vorgeben. Eine direkte Verknüpfung der Drehzahlen zueinander ist jedoch nicht vorgesehen. Die vorerwähnten Elemente der Gleichmässigkeitsregelung sind ebenfalls in Fig. 5 gezeigt, obwohl diese Regelung zur Zeit der Synchronisierung nicht im Einsatz ist. Fig. 6 zeigt diagrammatisch die Abbremskurve einer Karde nach Fig. 1. Diese Kurve wird nicht speziell erklärt, da sie zum Vergleich mit der Kurve nach Fig. 7 vorgelegt wird und aus diesem Vergleich ohne weiteres verstanden wird.

Die Figuren 7 und 8 stellen eine mögliche Abbremskurve und eine mögliche Hochlaufkurve dar, die wesentliche Unterschiede zu den bekannten Verfahren aufweisen. Auf der Abszisse ist die Zeit t angegeben, auf der Ordinate die Drehzahl U der Trommel 4 und der Abnehmerwalze 7. Die oberen Kurven A und A' stellen die Abbremskurve bzw. die Hochlaufkurve der Trommel 4 dar. Wie ersichtlich, gibt es hier eine lineare Verzögerung bzw. Beschlennigung, die mehrheitlich vom Massenträgheitsmoment der Trommel 4 bestimmt wird. Für die Abnehmerwalze 7 ergibt sich eine andere Abbremskurve B bzw. Hochlaufkurve B', welche sich an den Kurven der Trommel 4 orientiert. Bis zu einem Zeitpunkt tₐ läuft die Abnehmerwalze 7 und ebenzo die Trommel 4 mit normaler Betriebsgeschwindigkeit. Dann wird deren Drehzahl bis zum Zeitpunkt t_{b} auf eine tiefere Drehzahl linear gedrosselt. Die Drehgeschwindigkeit der Abnehmerwalze 7 bleibt sodann bis zu einem Zeitpunkt t_{c} konstant. Der Antrieb für die Trommel 4 kann ungefähr zu dem Zeitpunkt abgeschaltet werden, an dem die Drosselung der Drehzahl der Abnehmerwalze beginnt. Vorzugsweise beginnt das Abbremsen der Trommel 4 gleichzeitig (s. Fig. 7) mit dem Abbremsen der Abnehmerswalze 7, da durch diese Massnahme die Menge des Faserbandes mit schlechter Qualität auf ein Minimum reduziert wird. Am Zeitpunkt t_{c} stehen die Trommeldrehzahl und die Drehzahl der Abnehmerwalze in einem vorbestimmten Verhältnis zueinander und die Drehzahl der Abnehmerwalze wird danach wieder gedrosselt, so dass die Abnehmerwalze von daher synchron mit der Trommel 4 bis zum Stillstand ausläuft (Zeitpunkt tₛ).

Ein analoges Verhalten ist beim Hochlauf der Kardiermaschine 1 (Fig. 8) zu erkennen. Beim Hochlauf besteht allerdings zusätzlich die Notwendigkeit, die Beschleunigung der Abnehmerwalze 7 auf ihre Betriebsdrehzahl B' auszulösen. Dies kann nach der Zeit oder es kann durch eine Ueberwachung der Trommeldrehzahl gesteuert werden; zum Beispiel kann die Beschleunigung der Abnehmerwalze ausgelöst werden, wenn festgestellt wird, dass sich die Trommel an ihre Betriebsdrehzahl annähert bzw. diese erreicht hat.

Aus Fig. 7 ist zu entnehmen, dass die Trommel 4 und die Abnehmerwalze 7 zunächst unabhängig voneinander auf eine bestimmte Drehgeschwindigkeit abgebremst werden, und erst in einem engeren Bereich aufeinander abgestimmt werden, das heisst synchronisiert werden. Das gleiche gilt natürlich auch für den Hochlauf. Dadurch wird erreicht, dass im wirklich kritischen Bereich (zwischen tₛ und t_{c} bzw. t_{c},) die Walzendrehzahlen ein vorbestimmtes Verhältnis einhalten, welches die Kontinuität der Uebergabe von Fasern zwischen der Trommel und der Abnehmerwalze bis zum Stillstand gewährleistet. Ausserhalb dieses kritischen Bereiches ist es nicht notwendig, ein genaues Synchronisieren der Walzen zu erzielen, da die Kontinuität der Faserübergabe aus den auf der Trommel gespeicherten Faserschichten sowieso gewährleistet ist.

Es kann auch jede der beiden Walzen 4, 7 nach dem eigenen Auslaufmodus von der jeweiligen "Startdrehzahl" A bzw. B auf die vorbestimmte Geschwindigkeit runterlaufen, wo die Synchronisierung eintritt. Dies stellt eine Vereinfachung der Steuerungsanforderungen dar, weil (wie vorher erwähnt) die Drehzahlen A und B vorzugsweise individuell dem verarbeiteten Material angepasst werden, so dass die "Ausgangslage" bei einer bestimmten Bremsphase für die Maschinenkonstrukteure unvorhersehbar ist. Falls daher die Walzen 4, 7 über die ganze Bremsphase miteinander synchronisiert werden müssten, was im Prinzip technisch realisierbar ist, müsste jedesmal ein geeignetes "Bremskurvenpaar" von der Steuerung errechnet werden, was das Messen der "Startwerte" voraussetzt und anschliessend einen grossen Steuerungsaufwand erfordert. Dabei müsste allenfalls für jede Walze eine zweistufige Bremskurve vorgesehen werden, da beim linearen Bremsen der Abnehmerwalze bis zum Stillstand die in Fig. 6 dargestellten Synchronisierungsanforderungen nicht unbedingt erfüllt wären. Die entsprechenden Ableitungen für die Hochlaufphase (Fig. 8) sind ohne weiteres aus den vorhergehenden Bemerkungen zu entnehmen und werden hier nicht separat aufgeführt.

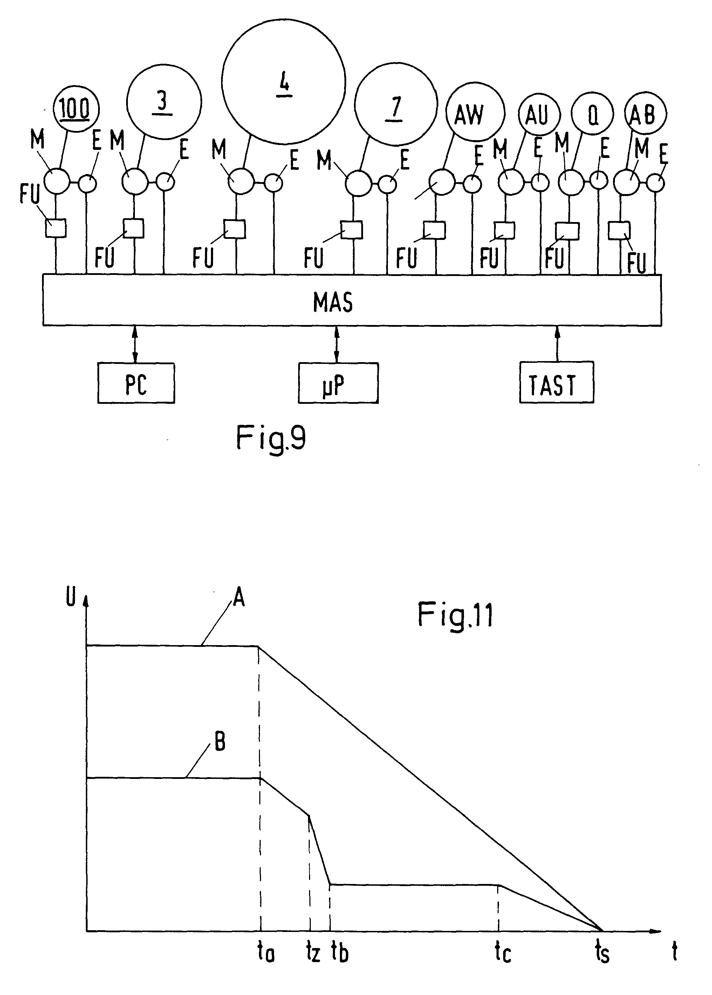

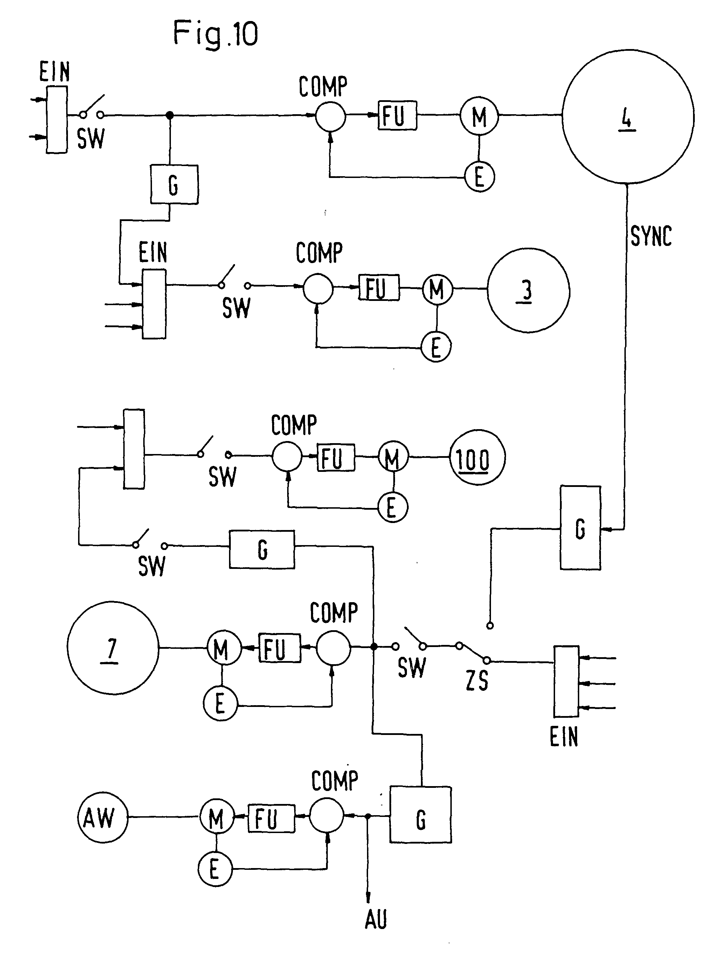

Das Antriebssystem nach den Figuren 9 und 10 ist für eine Karde konzipiert, die "einen Motor pro Achse" umfasst, das heisst jedes wichtige Arbeitselement der Karde ist mit einem eigenen, individuell steuerbaren Motor versehen. Diese Lösung ist natürlich gegenüber den Varianten nach den Figuren 2 bis 5 relativ aufwendig (teuer), eignet sich aber bestens für die Realisierung der Erfindung und wird daher ebenfalls hier aufgeführt.

Die Arbeitselemente der Karde nach Figuren 9 und 10 sind soweit möglich mit den gleichen Bezugszeichen versehen, wie die gleichen Elemente der Ausführung nach Fig. 1. Figur 9 zeigt daher schematisch die Trommel 4, den Briseur 3, die Speisewalze 100 und den Abnehmer 7. Zusätzlich sind in Fig. 9 einzel die Abnahmewalze AW, eine Auslaufwalze AU und die Querbandeinheit Q der Auslaufpartie 8 gezeigt. Die Abzugswalzen AB sind auch in Fig. 9 angedeutet und ebenfalls so in Fig. 1 bezeichnet, obwohl sie vorher nicht beschrieben worden sind.

Die Einzelantriebe für diese Elemente sind alle nach dem gleichen Prinzip gestaltet, so dass die Beschreibung des Einzelantriebes für die Trommel 4 als Beispiel für alle gelten kann. Dieser Einzelantrieb umfasst einen Motor M, einen Encoder E und einen Frequenzumrichter FU. Der Encoder E wird vom Motor M angetrieben und liefert ein entsprechendes Signal an eine Motorensteuerung MAS. Diese Steuerung liefert ein Leitsignal an den Frequenzumrichter FU, welcher den Motor M direkt steuert. Die Motorensteuerung MAS ist als "Uebersetzer" zwischen dem Einzelantrieb und der vorerwähnten Maschinensteuerung µP eingefügt. Die Motorensteuerung erhält Steuerbefehle von der Maschinensteuerung und wandelt diese in eine Form um, die für die Einzelantriebe geeignet ist. Die Befolgung dieser Befehle wird durch den Encoder überwacht. Zusätzlich kann über ein Eingabegerät TAST Sollwerte bzw. Befehle direkt an die Motorensteuerung MAS eingegeben werden. Die gleiche Funktion kann durch ein portables Gerät PC übernommen werden, wobei in diesem Fall das Gerät für die bidirektionale Kommunikation mit der Motorensteuerung programmiert werden kann.

Die Arbeitselemente der Karde sind in Fig. 10 nochmals schematisch angedeutet. Die Steuerungselemente nach Fig. 9 sind ebenfalls wieder in Fig. 10 aufgeführt. Weitere Steuerungselemente in Fig. 10 sind nach ihren jeweiligen Funktionen bezeichnet und zwar nach folgendem Kennzeichnungssystem:
- "EIN" -: bedeutet eine Eingabestelle, wo Befehle/Leitsignale eingegeben werden können,
- SW -: bedeutet einen Schalter, womit das jeweilige Arbeitselement ein-/aus geschaltet werden kann,
- COMP -: bedeutet eine Vergleichsfunktion, die einen Regelkreis für den jeweiligen Antriebsmotor schliesst,
- G -: bedeutet eine Schaltstelle, womit das Verhältnis zwischen zwei Antrieben eingestellt werden kann.

Von spezieller Bedeutung in Zusammenhang mit dieser Erfindung ist die Verbindung "SYNC" zwischen einem Encoder (nicht gezeigt) auf der Achse der Trommel 4 und einem Steuerungseingang zum Einzelantrieb des Abnehmers 7. Durch eine zusätzliche Schaltstelle ZS kann der Einzelantrieb für den Abnehmer wahlweise zwischen diesem "SYNC" Eingang und der "normalen" Eingangsstelle für den Normalbetrieb umgeschaltet werden. Die dargestellte Anordnung gilt nur als Beispiel. Die "SYNC"-Verbindung könnte dem dargestellten Encorder E des Trommelantriebes zugeordnet werden. Jeder Encoder E könnte der entsprechenden Walzenachse (statt der Motorenachse) zugeordnet werden.

Fig. 10 ist insofern vereinfacht worden, als die Einzelantriebe der Auslaufwalze, der Querbandeinheit und der Abzugswalzen nicht wieder aufgeführt worden sind, da der Signalfluss für diese Elemente dem Signalfluss an die Abnahmewalze AW gleich ist. Das System könnte vereinfacht werden, indem der Motor für den Abnehmer 7 gleichzeitig als Antriebsmotor für alle Walzen der Auslaufpartie dient.

Fig. 11 zeigt ein Zeitdiagramm für das Abbremsen einer Karde nach den Figuren 9 und 10. Sofern dieses Diagramm das Betriebsverhalten nach Fig. 7 aufweist, wird es hier nicht nochmals beschrieben, da dem Fachmann ohne weiteres aus Fig. 10 klar sein wird, dass das gewünschte Verhalten in einer Karde nach Fig. 9 erzielbar ist. In Fig. 11 ist aber eine zusätzliche Synchronisierungsphase vorgesehen, nämlich zwischen dem Einleiten des Abbremsens (Zeitpunkt tₐ) und dem Einleiten der starken Drosselung der Abnehmerdrehzahl (Zeitpunkt t_{z}). Während der Periode tₐ --> t_{z} kann ein Faserband mit akzeptabler Qualität hergestellt werden, was die Menge schlechten Faserbandes weiter reduziert. In dieser Periode tₐ --> t_{z} sollte sowohl die Synchronisierung wie auch die Zufuhrregelung eingeschaltet sein. Zum Zeitpunkt t_{z} können beide abgeschaltet werden, wobei die Synchronisierung zum Zeitpunkt t_{c} wieder eingeschaltet wird. Der Hochlauf kann natürlich entsprechend gestaltet werden.

Der Zeitpunkt t_{z} wird derart gewählt, dass die Bandqualität bei niedriger Trommeldrehzahlen (auch bei einem synchronisierten Antrieb des Abnehmers) nicht mehr gewährleistet werden kann. Dieser Zustand tritt ein, zum Beispiel wenn die Zentrifugalkräfte am Trommelmantel nicht mehr ausreichen, um die erforderliche Kardierwirkung zu erzielen. Die Steuerung kann nach der Zeit programmiert werden oder nach der abgetasteten Trommeldrehzahl.

Es hat sich in der Praxis gezeigt, dass die vorbeschriebenen Abläufe äusserst wirksam sind, um einen kannenlosen Verbund zwischen Karde und Strecke realisieren zu können, wobei Bandbrüche aufgrund von Faseranhäufungen oder Faservliesabrissen wirksam verhindert werden. Es versteht sich, dass die Trommel 4, die Speisewalze 100 und/oder die Abnehmerwalze 7 nicht unbedingt bis zum Stillstand abgebremst werden müssen, sondern auch bis zu einer sehr niedrigen Drehgeschwindigkeit abgebremst und von dort aus wieder hochgefahren werden können. Eine solche Anpassung der Drehgeschwindigkeiten ist vor allem erforderlich bei einem vorbeschriebenen kannenfreien Verbund zwischen der Karde und der Strecke. Aufgrund der unterschiedlichen Durchlaufzeiten des zu verarbeitenden Fasermaterials (Faservlies für die Karde und Kardenband für die Strecke) ist ein bandbruchfreies Abbremsen und wieder Hochfahren der Kardiermaschine von ausserordentlichem Belang. Jedoch kann ein solches Verfahren auch für andere Zwecke eingesetzt werden, beispielsweise für die bandbruchfreie Ueberbrückung von Störungen der Putzerei.

Die nachfolgenden Bemerkungen beziehen sich einfachheitshalber auf das Abstellen (Fig. 6). Die entsprechenden Ueberlegungen für das Hochfahren werden nicht separat aufgeführt, können aber direkt aus der Bremsphase abgeleitet werden.

Die Abnehmerdrehzahl wird als eine Funktion der Soll-Produktion eingestellt und wird auch wegen des Technologieeinflusses an das zu verarbeitende Material angepasst. Typische Drehzahlen der Abnehmerwalze sind zum Beispiel ca. 150 bis 200 U/min, während die Trommeldrehzahl in Abhängigkeit vom Material zwischen ca. 300 und 600 U/min gewählt werden kann. Die Abnehmerdrehzahl kann zum Beispiel auf einen vorbestimmten Wert im Bereich von 10 bis 20 U/min reduziert werden und erst danach mit der Trommel synchronisiert werden. Eine solche Drehzahlabnahme der Abnehmerwalze kann in einigen (z.B. 3 bis 8) Sekunden erfolgen.

Die Abnahme der Trommeldrehzahl erfordert eine deutlich längere Periode, zum Beispiel 2 bis 6 Minuten. Die Synchronisierung kann zum Beispiel ab einer Drehzahl erfolgen, welche den Minimalwert für den normalen Einsatz der Karde darstellt (im schon erwähnten Beispiel ca. 300 U/min). Die Synchronisierung kann ausgelöst werden, wenn ein Sensor meldet, dass die Trommeldrehzahl einen vorbestimmten Wert erreicht hat. Ab diesem Zeitpunkt t_{c} (Fig. 7 wird synchronisiert, was entweder durch die Ableitung der Steuerkurve für die Abnehmerwalze direkt aus dem festgestellten Verhalten der Trommel (als Leitelement) oder durch das Vorbestimmen von zwei geeigneten Bremskurven, was allerdings das Steuern des Auslaufverhaltens der Trommel bedeutet. Ein solches Verfahren ist eher schwierig wegen des hohen Trägheitsmomentes der Trommel, ist aber nicht ausgeschlossen. Die Erfindung ist auch dann anwendbar, wo ein regeneratives Bremsverfahren für die Trommel verwendet wird, vergleiche DE 41 06 331.

Die Erfindung ist bei vielen Motorentypen anwendbar, wovon hier nur einzelne Beispiele erwähnt sind, nämlich Asynchronmotoren (z.B. Käfigläufermotoren), DC-Motoren mit Ansteuergeräten (z.B. Steller und Chopper), AC-Servomotoren, Synchronmotoren, Reluktanzmotoren, bürstenlose Gleichstrommotoren.

## Patentansprüche

1. Karde mit einer Trommel (4) und einem Auslauf (8), einem Antriebsmotor (16) für die Trommel (4), mindestens einem Antriebsmotor (15) für den Auslauf und einer Steuerung (µp) für die Motoren (15, 16) **dadurch gekennzeichnet, dass** die Steuerung derart programmiert ist, dass beim Hochfahren bzw. beim Abstellen in einem ersten Drehzahlbereich in der Nähe des Stillstands die Motoren (15, 16) derart miteinander synchronisiert werden, dass dadurch Bandbrüche wegen Synchronisierungsfehler in diesem Drehzahlbereich vermieden werden, dass allenfalls in einem zweiten Drehzahlbereich in der Nähe der Betriebsdrehzahl auch eine Synchronisierung stattfindet, dass aber in einem dazwischenliegenden Drehzahlbereich keine solche Synchronisierung erfolgt.

2. Karde nach Anspruch 1, **dadurch gekennzeichnet, dass** das Synchronisieren über einen beschränkten Drehzahlbereich (Fig. 7, 8 und 11) erfolgt, der sich an den Stillstand anschliesst, bzw. dem Stillstand vorausgeht.

3. Karde nach Anspruch 1, **dadurch gekennzeichnet, dass** die Synchronisierung ab bzw. bis zu einer vorgegebenen Mindestdrehzahl (Fig. 7 und 8) der Trommel (4) bzw. der Abnehmerwalze (7) erfolgt.

4. Karde nach Anspruch 1, **dadurch gekennzeichnet, dass** beim Synchronisieren die Trommel (4) bzw. ein Element, das einen massgebenden Einfluss auf die Trommeldrehzahl ausübt, als Leitelement für die Synchronisierung dient.

5. Karde nach einem der Ansprüche 1 bis 4, **dadurch gekennzeichnet, dass** die Antriebe der Trommel (4) und der Abnehmerwalze (7) jeweils aus einem frequenzgesteuerten Elektromotor (15, 16) mit einem Frequenzumrichter (14, 17) bestehen, und dass die Steuerung (µp) derart ausgelegt ist, dass sie einen Sollwert für die Drehgeschwindigkeit der Trommel (4) an dessen Frequenzumrichter (17) vorgibt, und anhand dieses Sollwertes einen Leitwert (27) für die Drehgeschwindigkeit der Abnehmerwalze (7) berechnet.

6. Karde nach Anspruch 5, **dadurch gekennzeichnet, dass** der Antrieb der Speisewalze aus einem frequenzgesteuerten Elektromotor (13) mit einem Frequenzumrichter (12) besteht, und dass die Steuerung (µp) anhand des Sollwertes einen weiteren Leitwert (26) für die Drehgeschwindigkeit der Speisewalze (100) berechnet.

7. Karde nach einem der Ansprüche 1 bis 5, **dadurch gekennzeichnet, dass** ein Messmittel (18, 19) für die Messung der aktuellen Drehgeschwindigkeit der Trommel (4) vorgesehen ist, von dessen Messignal ein Leitwert (27) für die Drehgeschwindigkeiten der Abnehmerwalze (7) über die Steuerung berechnet wird.

8. Karde nach einem der Ansprüche 1 bis 4, **dadurch gekennzeichnet, dass** der Antrieb der Trommel ein polumschaltbarer Elektromotor (22) ist, und dass ein Messmittel (18, 19) an der Trommel (4) zur Messung der aktuellen Drehgeschwindigkeit vorgesehen ist, wobei eine Steuerung (23) derart ausgestaltet ist, dass sie aufgrund des Messignals einen Leitwert für die Drehgeschwindigkeit der Speisewalze und einen Leitwert für die Drehgeschwindigkeit der Abnehmerwalze berechnet.

9. Karde nach einem der Ansprüche 1 bis 4, **dadurch gekennzeichnet, dass** die Steuerung derart ausgestaltet ist, dass sie für jeden Antrieb von Trommel (4) und Abnehmerwalze (7) einen unabhängigen Sollwert für die jeweilige Drehgeschwindigkeit der Trommel oder der Abnehmerwalze (7) bestimmt und an einen jeweiligen Frequenzumrichter (14, 17) weitergibt.

10. Karde nach einem der Ansprüche 5 bis 9, **dadurch gekennzeichnet, dass** die frequenzgesteuerten Elektromotoren (13, 15, 16) Asynchronmotoren sind.

11. Karde nach einem der Ansprüche 1 bis 10, **dadurch gekennzeichnet, dass** die Steuerung derart ausgestaltet ist, dass die Drehgeschwindigkeit der Trommel (4) stetig und linear bis zu einer niedrigen Drehgeschwindigkeit oder bis zum Stillstand gedrosselt wird und dass die Drehgeschwindigkeit der Abnehmerwalze erst nach fortgeschrittener Drosselung anhand eines Leitwertes (27) in synchronisiertem Verhältnis zur Drehzahl der Trommel gedrosselt wird.

12. Karde nach Anspruch 11, **dadurch gekennzeichnet, dass** die Steuerung derart ausgestaltet ist, dass die Drehgeschwindigkeit der Abnehmerwalze (7) zunächst auf eine niedrigere, konstante Drehgeschwindigkeit abgebremst wird.

13. Karde nach Anspruch 5, **dadurch gekennzeichnet, dass** die Steuerung derart ausgestaltet ist, dass die Drehgeschwindigkeit der Trommel vom Stillstand oder ab einer vorgegebenen Mindestdrehzahl bis zur vorgewählten Betriebsgeschwindigkeit erhöht wird, und dass die Drehgeschwindigkeiten der Abnehmerwalze (7) vom Stillstand oder ab einer vorgegebenen Mindestdrehzahl entsprechend einem Leitwert erhöht wird.

14. Karde nach Anspruch 13, **dadurch gekennzeichnet, dass** die Steuerung derart ausgestaltet ist, dass die Drehgeschwindigkeit der Abnehmerwalze (7) bis zu einer höheren, konstanten Drehgeschwindigkeit erhöht wird, und von dieser aus erst weiter erhöht wird, wenn die normale Betriebsgeschwindigkeit der Trommel erreicht bzw. angenähert ist.

## Claims

1. Card with a cylinder (4) and a discharge arrangement (8), a drive motor (16) for the cylinder (4), at least one drive motor (15) for the discharge arrangement (8) and a control means (µp) for the motors (15, 16), **characterised in that** the control means is programmed in such a way, that, during the start-up and/or during stopping procedure, within a first speed range close to stand-still, the motors (15, 16) are being synchronised in such way that breakages of the web are avoided, due to synchronisation faults within this speed range, that possibly in a second speed range close to the operating speed a synchronisation also takes place, that, however, within an intermediate speed range no such synchronisation takes place.

2. Card according to claim 1, **characterised in that** the synchronisation takes places over a limited speed range (figures 7, 8 and 11) which follows the stand-still or precedes the stand-still respectively.

3. Card according to claim 1, **characterised in that** the synchronisation takes places from or up to, respectively, a predetermined minimum speed (figures 7 and 8) of the cylinder (4) or doffer (7), respectively.

4. Card according to claim 1, **characterised in that** during synchronisation the cylinder (4) or an element, respectively, which has an essential influence on the rotational speed of the cylinder serves as a guide element for the synchronisation.

5. Card according to one of the claims 1 to 4, **characterised in that** the drives of the cylinder (4) and the doffer (7) each comprise a frequency controlled electric motor (15, 16) with a frequency converter (14, 17), and that the control means (µp) is laid-out in such a way that it pre-sets a desired value for the rotational speed of the cylinder (4) at the frequency converter (17) and based on this set value calculates a guide value (27) for the rotational speed of the doffer (7).

6. Card according to claim 5, **characterised in that** the drive of the feed roller comprises a frequency controlled electric motor (13) with a frequency converter (12) and that the control means (µp) by way of the set value calculates another guide value (26) for the rotational speed of the feed roller (100).

7. Card according to one of the claims 1 to 5, **characterised in that** a measuring means (18, 19) is provided for measuring of the actual rotational speed of the cylinder (4) from whose measuring signal a guide value (27) is being calculated by the control means (µp) for the rotational speed of the doffer (7).

8. Card according to one of the claims 1 to 4, **characterised in that** the drive of the cylinder comprises a pole-changeable electric motor (22) and that a measuring means (18, 19) is provided on the cylinder (4) for measuring the actual rotational speed, whereat a control means (23) is being configured in such way, that, based on the measuring signal, it calculates a guide value for the rotational speed of the feed roller and a guide value for the rotational speed of the doffer.

9. Card according to one of the claims 1 to 4, **characterised in that** the control means is being configured in such way, that it determines for each drive, of the cylinder (4) and doffer (7), an independent desired value for the respective rotational speed of the cylinder or the doffer (7) and transmits it to a respective frequency converter (14, 17).

10. Card according to one of the claims 5 to 9, **characterised in that** the frequency controlled electric motors (13, 15, 16) are asynchronous motors.

11. Card according to one of the claims 1 to 10, **characterised in that** the control means is being configured in such way, **in that** the rotational speed of the cylinder (4) is continuously and linearly decelerated down to a low rotational speed or to stand-still and that the rotational speed of the doffer is being decelerated only after advanced deceleration based on the guide value (27) in a synchronised ratio to the speed of the cylinder.

12. Card according to claim 11, **characterised in that** the control means is being configured in such way, **in that** the rotational speed of the doffer (7) at first is being decelerated down to a low, constant rotational speed.

13. Card according to claim 5, **characterised in that** the control means is being configured in such way, **in that** the rotational speed of the cylinder is being increased from stand-still or from a pre-set minimum speed up to a predetermined operating speed and that the rotational speed of the doffer (7) is being increased from stand-still or from a pre-set minimum speed according to a guide value.

14. Card according to claim 13, **characterised in that** the control means is being configured in such way, **in that** the rotational speed of the doffer (7) is being increased up to a higher, constant rotational speed, and from said speed it is being further increased only then, if the normal operating speed of the cylinder has been reached or has nearly been reached, respectively.

## Revendications

1. Carde possédant un tambour (4) et une sortie (8), un moteur d'entraînement (16) pour le tambour (4), au moins un moteur d'entraînement (15) pour la sortie, et un asservissement (pp) pour les moteurs (15,16)
**caractérisée par le fait que**
l'asservissement est programme de telle manière que, Tors de la mise en marche respectivement lors de la mise à l'arrêt, les moteurs (15,16) sont synchronises l'un avec l'autre, dans une première zone de nombre de tours approchant l'arrêt, de sorte que, par cela, des casses de rubans, provoquées par des fautes de synchronisation dans cette zone de nombre de tours, sont évitées, que, tout au plus, une Synchronisation a également lieu dans une deuxième zone de nombre de tours approchant le nombre de tours de fonctionnement, mais qu'une telle synchronisation n'a pas lieu dans une tone de nombre de tours située entre les deux zones.

2. Carde selon revendication 1,
**caractérisée par le fait que**
la Synchronisation est réalisée dans une zone de nombre de tours délimitée (figures 7, 8 et 11) qui Fait suite à l'arrêt, respectivement qui précède l'arret.

3. Carde selon revendication 1,
**caractérisée par le fait que**
la Synchronisation est réalisée à partir de, respectivement jusqu'à un nombre de tours minimum prédéterminé (figures 7 et 8) du tambour (4), respectivement du rouleau peigneur (7).

4. Carde selon revendication 1,
**caractérisée par le fait que**,
lors de la Synchronisation, le tambour (4) respectivement un élément exerçant une influence déterminante sur le nombre de tours du tambour, est utilisé comme élément dirigeant la synchronisation.

5. Carde selon Tune des revendications 1 à 4,
**caractérisée par le fait que**
les entraînements du tambour (4) et du rouleau peigneur (7) sont constitues chacun par un moteur électrique (15,16) asservi par fréquence, avec un changeur de fréquence (14,17), et que l'asservissement (pp) est conçu de telle manière qu'il alloue une valeur de consigne pour la vitesse de rotation du tambour (4), au changeur de fréquence (17) de celui-ci, et, à l'aide de cette valeur de consigne, calcule une valeur dirigeante (27) pour la vitesse de rotation du rouleau peigneur (7).

6. Carde selon revendication 5,
**caractérisée par le fait que**
l'entraînement du rouleau alimentaire est constitue par un moteur électrique (13) asservi par fréquence, avec un changeur de fréquence (12), et que, à l'aide de la valeur de consigne, l'asservissement (pp) calcule une autre valeur dirigeante (26) pour la vitesse de rotation du rouleau alimentaire (100).

7. Carde selon Tune des revendications 1 à 5
**caractérisée par le fait**
**qu'**un moyen de mesure (18,19) est prévu pour la mesure de la vitesse de rotation actuelle du tambour (4), et, à partir du signal de mesure de celui-ci, une valeur dirigeante (27) est calculée via l'asservissement, pour les vitesses de rotation du rouleau peigneur (7).

8. Carde selon Tune des revendications 1 à 4,
**caractérisée par le fait que**
l'entraînement du tambour est un moteur électrique (22) à commutation polaire, et qu'un moyen de mesure (18,19) est prévu sur le tambour (4) pour la mesure de la vitesse de rotation actuelle du tambour, et où un asservissement (23) est conçu de telle manière qu'il calcule, à l'aide du signal de mesure, une valeur dirigeante pour la vitesse de rotation du rouleau alimentaire et une valeur dirigeante pour la vitesse de rotation du rouleau peigneur.

9. Carde selon Tune des revendications 1 à 4,
**caractérisée par le fait que**
l'asservissement est réalisé de telle manière que, pour chaque entraînement du tambour (4) et du rouleau peigneur (7), il détermine une valeur de consigne indépendante pour chaque vitesse de rotation du tambour ou du rouleau peigneur (7), et la transmet à un changeur de fréquence respectif (14,17).

10. Carde selon Tune des revendications 5 à 9,
**caractérisée par le fait que**
les moteurs électriques (13,15,16) asservis par fréquence sont des moteurs asynchrones.

11. Carde selon Tune des revendications 1 à 10,
**caractérisée par le fait que**
l'asservissement est réalisé de telle manière que la vitesse de rotation du tambour (4) est bridée d'une manière continue et linéaire jusqu'à une basse vitesse de rotation ou jusqu'à l'arrêt, et que, à l'aide d'une valeur dirigeante (27), la vitesse de rotation du rouleau peigneur est bridée seulement après un bridage avance, dans une relation synchronisée par rapport au nombre de tours du tambour.

12. Carde selon revendication 11,
**caractérisée par le fait que**
l'asservissement est conçu de telle manière que la vitesse de rotation du rouleau peigneur (7) est d'abord freinée jusqu'à une vitesse de rotation plus basse et constante.

13. Carde selon revendication 5,
**caractérisée par le fait que**
l'asservissement est conçu de telle manière que la vitesse de rotation du tambour est augmentées, depuis l'arrêt ou à partir d'un nombre de tours minimum prédétermine, jusqu'à la vitesse de marche choisie à l'avance, et que les vitesses de rotation du rouleau peigneur (7) sont augmentées depuis l'arrêt, ou à partir d'un nombre de tours minimum prédétermine, selon une valeur dirigeante.

14. Carde selon revendication 13,
**caractérisée par le fait que**
l'asservissement est conçu de telle manière que la vitesse de rotation du rouleau peigneur (7) est augmentée jusqu'à une vitesse de rotation plus élevée et constante, et, à partir de celle-ci, est augmentée au fur et à mesure que la vitesse de marche normale du tambour est atteinte, respectivement approchée.
